# EUROPEAN PATENT APPLICATION

(11) **EP 2 520 145 A1**
(43) Date of publication of application: **07.11.2012**
(21) Application number: 12445002.4
(22) Date of filing: 27.04.2012
(51) Int. Cl.: A01B 59/048, A01B 63/108

(54) **Stabilizing device**

(30) Priority: 01.05.2011 SE 1100330
(71) Applicant: Kälvesten, Hans, 59193 Motala (SE)
(72) Inventor: Kälvesten, Hans, 59193 Motala (SE)
(74) Representative: Berglund, Erik Wilhelm

(57) **Abstract**

Device for providing a more even motion for a tractor on fields or arable land with uneven ground, by in the front of the tractor arrange two or several pressure wheels (1,2) that run beside each other in front of the wheels of the tractor. The wheels (1,2) are arranged displaced laterally and longitudinally so that they like a plow can push large stones or earth clods to the side alternatively evening the ground in front of the tractor wheels by the pressing down effect.

## Description

At the use of vehicles, for instance tractors self propelled growth protection sprinklers, contract machines and the like on agricultural ground the ground is not always even. This result in and jolts and vibrations that are not only uncomfortable but can also cause wear of the body. Vehicles, which like tractors, have one or several axles that are fastened directly in the frame are particularly subjected to these problems. Although modem seats can improve the situation this is not really enough. Unevenness in the ground can however be a problem also in other ways. If weeds as in particular quitch grass begin to grow in ground that hat has been plowed in the autumn you don't want to harrow since the quitch grass then become hidden and remain. The ideal in this situation would be to spray a suitable weed-killer before continued preparation and sowing. This is however not so easily done since the machines that are used for the spreading of weed killers have a very large width (at spreading), which in combination with the wobbling of the tractor result in an uneven and insufficiently covering spread pattern. In the extreme case the spreading arms may come in contact with the ground and be damaged or nozzles may become blocked.

Based on the above problems the object of the invention is to achieve a more stable motion for tractors and other machines at work on arable land and fields with an uneven surface.

The above object is in accordance with the invention solved with a device that is mounted in the frame of the vehicle in the front end of this and that comprise pressure means, preferably in the shape of freely rotatable wheels mounted in front of the wheels of the vehicle and that at use are in contact with or are being pressed against the ground. These pressure means may be unelastic in themselves and unelastic and/or rigidly mounted in relation to the frame, either directly in this or in front hydraulics that advantageously are double acting and can be locked or fixed at different height levels for the device. The pressure means may have different shapes dependent on the ground, down-cutting or flat, where the latter become more unyielding and therefore reasonably give a better damping. The pressure means may be wheels, cast or of metal sheet. If the ground is sensitive one can also consider rubber wheels, and possibly also consider increasing the number of pressure wheels. It is also possible to consider runners or ski-like sliding pressure means located in front of the front wheels of the vehicle.

The pressure means can be adjusted to such a level that if the vehicle is placed on a level ground also the pressure means are to be in contact with the level ground. Depending on the yielding of the ground where the work is to be carried out possibly a higher or a lower level may be desirable. Height adjustment is preferably achieved with a hydraulic cylinder that both can press the device and thus the pressure means against the ground, as well as lifting the same. The pressure means shall in principle be unelastic, that is they are not to move in relation the frame and rear wheels of the vehicle. In order to avoid damages it may however be appropriate with a relief valve that release at a given maximal pressure that may be adjustable.

When the pressure means are in contact with the ground they will counteract any tendency of the vehicle to rock forward and stabilize the vehicle in this way. At a lateral rocking that may occur when for instance rear wheels of a tractor passes unevenness's the pressure means will also counteract lateral twisting and tilting.

The pressure means will also individually separately and without mutual interference push protruding material forwards and backwards as well as towards the sides so that the following wheels of the vehicle, and then in particular the rear wheels run in a leveled track. By arranging the pressure means displaced laterally as well as lengthwise more or less as a flight of birds this effect is improved further by the combined effect of the pressure means that together make a plough that also can push away earth and/or rocks that don't break or get pushed down.

If the rear wheels of the vehicle are completed with a double mounting one can even for this arrange an evening set of pressure means in the device.

Since evening will only take place where the vehicle wheels will run the rolling resistance will not be so large.

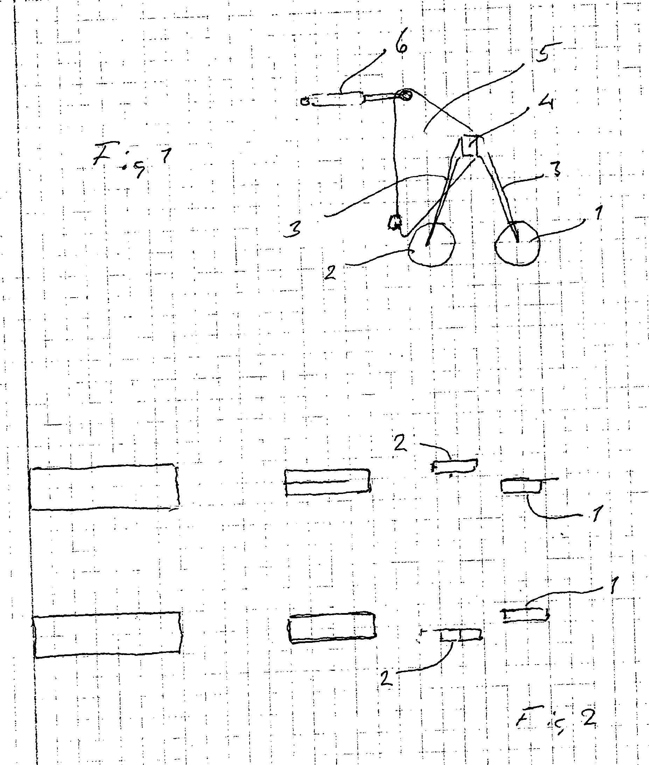

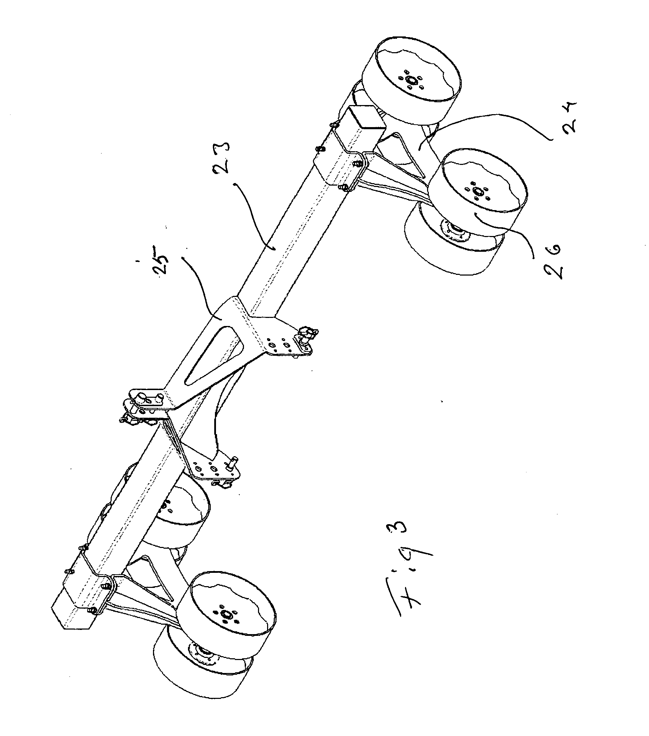

Further advantages and characteristics of the invention are apparent from the patent claims and the following description of an embodiment of the invention with reference to the enclosed drawing, where fig. depicts a device according to the invention seen from the side, fig. 2 a relative placing of tractor wheel and pressure wheel, and fig. 3 a second embodiment of a device according to the invention.

The stabilizing device shown in figs. 1 and 2 comprise on each side two pressure wheels of sheet metal, a front one 1 and a rear one 2. These pressure wheels run when the tractor travels straight forward in front of wheels of the tractor and evens the track where tractor's wheels will run so that the movements of this when the ground is uneven is reduced forwards, backwards as well as laterally. The pressure wheels are fastened in separate struts 3 that in turn are fastened in a beam 4 that extends crosswise in relation to the tractor. The beam 4 is via a bracket 5 journalled pivotably vertically in the lower front end of the vehicle and in the upper end the bracket is via a hydraulic cylinder 6 connected to the front end of the tractor.

With the hydraulic cylinder 6 the pressure wheels 1, 2 can be lifted up when they are not needed. The hydraulic cylinder can also press the pressure wheels against the ground so that they take a part of the weight on the front wheels of the tractor, and the position of the hydraulic cylinder may also be locked by blocking the flow of oil to and from the hydraulic cylinder. As to longitudinal pendulum movements the effect of the stabilizing device will basically be as an extension of the wheelbase. Since the pressure wheels are essentially non-elastically connected to the frame of the tractor they will stabilize the tractor against lateral as well as longitudinal sway when the rear wheels of the tractor pass unevenness. Since the pressure wheels are non-elastically arranged possible pendulum tendencies forward/rearward are also attenuated since the pendulum movements are stopped when the pressure wheels hit the ground.

The embodiment in fig. 3 also comprise a transverse beam 23 that is non-elastically connected to the frame of the tractor via a bracket 25 and a not shown double acting and lockable front hydraulics that in addition to the possibility of a lifting or lowering respectively also can be locked in an adjusted position. On the beam triangular supports 24 with the tip end upwards are fastened. The supports can be released and moved along the beam for adaption to the track width of the tractor. In the vicinity of the lower corners of the triangular supports pairs of wheels 26 are arranged with axles in parallel with the rear axle of the tractor and on each side of the corresponding support.

The effect of the invention is however not limited to the immediate improvement in stability but the ground is also made more even by the pressure wheels, that for instance break up clods and heaps of earth and spread parts thereof laterally as well as also backwards and forwards. Larger stones or hard earth clods are pushed aside by the pressure wheels in the version of fig. 1 where the wheels for each track function as a plow. Whether the wheels are placed as in fig. 1 and 2 the earth is quite simply pushed down or to the sides by the pressure wheels when the front wheels of the tractor pass over a hole or for instance over a plow furrow so that the front wheels hang in the air at the same time as the pressure wheels take over the load from the front wheels. If instead the pressure wheels pass over depressions or the tractor front wheels pass over a bump the front wheels of the tractor will instead be pressed down and contribute to the evening until the pressure wheels again come in contact with the ground. The result is that the wheel tracks become increasingly more even every time you drive in them. Since it is usually preferred that you drive in the same tracks at sowing, fertilizing as well as weed control an increasingly more even ground for the tractor is obtained during the up to seven times that you drive in the same tracks. The comfort and the precision in the work are improved. Furthermore the drive speed can be increased with a considerable time gain for the work as a result. Since weed control can take place when the ground is only plowed the weed control will be more efficient so that it may be possible to do with a smaller number of times that you have to drive for this. In some cases you may alternatively reduce the number of earth evening drives since the fields do not have to be entirely even for the drive tracks.

In the shown embodiments the pressure wheels are lengthwise only placed at two locations, but the pressure wheels can be more and for instance be placed on alternating sides of the support or struts in order to provide a more even movement when the wheels of the tractor are lifted for a longer stretch.

Possibly one could consider arranging the front pressure wheels somewhat higher to distribute the load taken between front and rear pressure wheels and facilitate the passing of higher unevenness's. Possibly this difference in height can be adjustable, alternatively the same effect can be achieved with different pressure wheel diameters for the rear ones and the front ones. If the height difference is adjustable the height difference for each run in the same track can be reduced.

It is also possible to consider a variable distance between support wheels and tractor wheels to avoid that this coincide with the distance between the bumps or depressions in the drive direction respectively. Advantageously this adjustment may take place when driving for adaption by the driver to a distance that provides the best result I for comfort and drive speed. With modem sensor and control technique it is also possible to consider an automatic adjustment of the distance between the pressure wheels and the front wheels of the tractor for the best drive conditions.

If so desired one can also arrange a parallelogram suspension for the pressure mean so that they move in parallel at lifting as well as when pressing downwards. One can even consider to displace the pressure means laterally so that they the ground for front or rear wheels at moderate turning. Also one can consider releasing the pressing down of the pressure means, or even that the stabilizing device is lifted, at considerable turning to prevent the pressure means from counteracting the turning. These measures can also take place automatically.

## Claims

1. Device for providing a more even motion for a vehicle on a field with uneven ground, **characterized in that** it is fastened in the front end of the device and provided with against the ground acting pressure means, placed in front of the vehicle in the respective track for one or several of the wheel pairs of the vehicle.

2. Device according to claim 1, **characterized in that** it comprise more than one pressure means for each track.

3. Device according to claim 1 or 2, **characterized in that** two or several pressure means for a track are mutually displaced in the length direction of the track.

4. Device according to claim 1 or 2, **characterized in that** two or several pressure means for a track are mutually displaced lengthwise of the track and laterally so that a plowing effect or working is obtained.

5. Device according to claim 1, 2, 3 or 4, **characterized in that** the pressure means at use are essentially non-elastically arranged in relation to the frame of the vehicle.

6. Device according to any of the preceding claims, **characterized in that** the device can be lifted and be pressed down against the ground, for instance with hydraulics.

7. Device according to any of the preceding claims, **characterized in that** the pressure means are rotatable.

8. Device according to any of the preceding claim, **characterized in that** the pressure means are wheels.

9. Device according to any of the preceding claims, **characterized in that** the pressure means are exchangeable.

10. Device according to any of the preceding claims, **characterized in that** it in itself is relatively non-elastic.

11. Device according to any of the preceding claims, **characterized in that** the front pressure wheels are arranged higher than the rear ones.
